# EUROPEAN PATENT APPLICATION

(11) **EP 3 739 927 A1**
(43) Date of publication of application: **18.11.2020**
(21) Application number: 18900225.6
(22) Date of filing: 09.01.2018
(51) Int. Cl.: H04W 16/14, H04W 72/04

(54) **BANDWIDTH PART TIMING METHOD AND DEVICE, AND COMMUNICATION SYSTEM**

(71) Applicant: FUJITSU LIMITED, Kanagawa 211-8588 (JP)
(72) Inventor: SHI, Yulong, Beijing 100027 (CN); LI, Guorong, Beijing 100027 (CN); ZHANG, Lei, Beijing 100027 (CN)
(74) Representative: Haseltine Lake Kempner LLP
(86) International application number: PCT/CN2018/071936
(87) International publication number: WO 2019/136598

(57) **Abstract**

A bandwidth part timing method and apparatus and communication system. The bandwidth part timing apparatus includes: a first processing unit configured to start or restart a timer associated with a bandwidth part (BWP) when an event associated with cell addition or cell activation occurs; or, a second processing unit configured to start or restart a timer associated with a BWP when control signaling indicating assignment is received and the control signaling indicating assignment is irrelevant to a random access procedure; or, a third processing unit configured to start or restart a timer associated with a BWP after a random access procedure is completed. Hence, a problem that a timer associated with a BWP is unable to be started or restarted in a scenario of cell addition or cell activation may be solved, or a problem that a timer associated with a BWP is unable to be started or restarted during a random access procedure or when a random access procedure is completed may be solved.

## Description

### Field

This disclosure relates to the field of communication technologies, and in particular to a bandwidth part timing method and apparatus and a communication system.

### Background

In the long term evolution (LTE) system Release 15, the maximum channel bandwidth may reach 400 MHz (i.e. a wide carrier). If a user equipment capable of broadband is always operating on the above wide carrier, the power consumption will be large. Therefore, a bandwidth part (BWP) is introduced in the 3rd Generation Partnership Project (3GPP), with one of motivations being to optimize the power consumption of a terminal equipment.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that with the introduction of the BWP, the network side may pre-configure one or more uplink or downlink BWPs for the terminal equipment, including an initial BWP, a default BWP, and an active BWP, etc., and configure a timer associated with a BWP for the terminal equipment; and the terminal equipment may operate by using the active BWP, and autonomous switch, activation, and deactivation, etc., may be performed between multiple BWPs under control of the timer.

Currently, the timer associated with a BWP may be triggered to be started or restarted via downlink control signaling. However, for some application scenarios where no downlink control signaling is received, the timer associated with a BWP also needs to be started or restarted; or in some application scenarios where downlink control signaling is received, the timer associated with a BWP does not need to be triggered or started. Therefore, if only downlink control signaling being received is taken as a triggering condition to trigger the start or restart of the timer associated with a BWP, use of the timer associated with a BWP in the above application scenarios cannot be covered.

In order to solve the above problem, embodiments of this disclosure provide a bandwidth part timing method and apparatus and a communication system, in which by adding triggering conditions for starting or restarting a timer associated with a BWP, a problem that a timer associated with a BWP is unable to be started or restarted in a scenario of cell addition or cell activation may be solved, or a problem that a timer associated with a BWP is unable to be started or restarted during a random access procedure or when a random access procedure is completed may be solved.

According to a first aspect of the embodiments of this disclosure, there is provided a bandwidth part timing apparatus, including:
a first processing unit configured to start or restart a timer associated with a BWP when an event associated with cell addition or cell activation occurs.

According to a second aspect of the embodiments of this disclosure, there is provided a bandwidth part timing apparatus, including:
a second processing unit configured to start or restart a timer associated with a BWP when control signaling indicating assignment is received and the control signaling indicating assignment is irrelevant to a random access procedure.

According to a third aspect of the embodiments of this disclosure, there is provided a bandwidth part timing apparatus, including:
a third processing unit configured to start or restart a timer associated with a BWP after a random access procedure is completed.

According to a fourth aspect of the embodiments of this disclosure, there is provided a bandwidth part timing method, including:
starting or restarting a timer associated with a BWP by a terminal equipment when an event associated with cell addition or cell activation occurs.

According to a fifth aspect of the embodiments of this disclosure, there is provided a bandwidth part timing method, including:
starting or restarting a timer associated with a BWP by a terminal equipment when control signaling indicating assignment is received and the control signaling indicating assignment is irrelevant to a random access procedure.

According to a sixth aspect of the embodiments of this disclosure, there is provided a bandwidth part timing method, including:
starting or restarting a timer associated with a BWP by a terminal equipment after a random access procedure is completed.

According to a seventh aspect of the embodiments of this disclosure, there is provided a bandwidth part timing apparatus, including:
a configuring unit configured to configure relevant parameters of a cell to be added or activated for a terminal equipment and configure relevant information on a BWP used to transmit data or receive data in the cell for the terminal equipment;
a first transmitting unit configured to transmit the configured relevant parameters and relevant information on the BWP to the terminal equipment via first signaling; and
a fourth processing unit configured to start or restart a timer associated with the BWP when an event associated with cell addition or cell activation occurs at a terminal equipment side.

According to an eighth aspect of the embodiments of this disclosure, there is provided a bandwidth part timing apparatus, including:
a second transmitting unit configured to transmit control signaling indicating assignment to a terminal equipment side; and
a fifth processing unit configured to start or restart a timer associated with a BWP when the control signaling indicating assignment is received at a UE side and the control signaling indicating assignment is irrelevant to a random access procedure.

According to a ninth aspect of the embodiments of this disclosure, there is provided a bandwidth part timing apparatus, including:
a sixth processing unit configured to start or restart a timer associated with a BWP after a random access procedure at a UE side is completed.

According to a tenth aspect of the embodiments of this disclosure, there is provided a bandwidth part timing method, including:
configuring relevant parameters of a cell to be added or activated by a network side for a terminal equipment and configuring relevant information on a BWP used to transmit data or receive data in the cell for the terminal equipment;
transmitting the configured relevant parameters and relevant information on the BWP to the terminal equipment via first signaling; and
starting or restarting a timer associated with the BWP by the network side when an event associated with cell addition or cell activation occurs at a terminal equipment side.

According to an eleventh aspect of the embodiments of this disclosure, there is provided a bandwidth part timing method, including:
transmitting control signaling indicating assignment by a network side to a terminal equipment side; and
starting or restarting a timer associated with a BWP by the network side when the control signaling indicating assignment is received at a UE side and the control signaling indicating assignment is irrelevant to a random access procedure.

According to a twelfth aspect of the embodiments of this disclosure, there is provided a bandwidth part timing method, including:
starting or restarting a timer associated with a BWP by a network side after a random access procedure at a UE side is completed.

An advantage of the embodiments of this disclosure exists in that by adding triggering conditions for starting or restarting a timer associated with a BWP, a problem that a timer associated with a BWP is unable to be started or restarted in a scenario of cell addition or cell activation may be solved, or a problem that a timer associated with a BWP is unable to be started or restarted during a random access procedure or when a random access procedure is completed may be solved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a communication system of an embodiment of this disclosure;
FIG. 2 is a flowchart of the bandwidth part timing method of Embodiment 1 of this disclosure;
FIG. 3 is a flowchart of the bandwidth part timing method of Embodiment 1 of this disclosure;
FIG. 4 is a flowchart of the bandwidth part timing method of Embodiment 1 of this disclosure;
FIG. 5 is a flowchart of the bandwidth part timing method of Embodiment 2 of this disclosure;
FIG. 6 is a flowchart of the bandwidth part timing method of Embodiment 3 of this disclosure;
FIG. 7 is a flowchart of the bandwidth part timing method of Embodiment 4 of this disclosure;
FIG. 8 is a flowchart of the bandwidth part timing method of Embodiment 5 of this disclosure;
FIG. 9 is a flowchart of the bandwidth part timing method of Embodiment 6 of this disclosure;
FIG. 10 is a schematic diagram of the bandwidth part timing apparatus of Embodiment 7 of this disclosure;
FIG. 11 is a schematic diagram of a structure of the terminal equipment of Embodiment 8 of this disclosure;
FIG. 12 is a schematic diagram of the bandwidth part timing apparatus of Embodiment 9 of this disclosure;
FIG. 13 is a schematic diagram of a structure of the terminal equipment of Embodiment 10 of this disclosure;
FIG. 14 is a schematic diagram of the bandwidth part timing apparatus of Embodiment 11 of this disclosure;
FIG. 15 is a schematic diagram of a structure of the terminal equipment of Embodiment 12 of this disclosure;
FIG. 16 is a schematic diagram of the bandwidth part timing apparatus of Embodiment 13 of this disclosure;
FIG. 17 is a schematic diagram of a structure of the network device of Embodiment 14 of this disclosure;
FIG. 18 is a schematic diagram of the bandwidth part timing apparatus of Embodiment 15 of this disclosure;
FIG. 19 is a schematic diagram of a structure of the network device of Embodiment 16 of this disclosure;
FIG. 20 is a schematic diagram of the bandwidth part timing apparatus of Embodiment 17 of this disclosure;
FIG. 21 is a schematic diagram of a structure of the network device of Embodiment 18 of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. The embodiments of this disclosure shall be described below with reference to the accompanying drawings. These embodiments are illustrative only, and are not intended to limit this disclosure.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of' in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, and/or other communication protocols that are currently known or will be developed in the future.

In the embodiments of this disclosure, the term "network device", for example, refers to a device in a communication system that accesses terminal equipment to the communication network and provides services for the terminal equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC).

The base station may include but not limited to a node B (NodeB or NB), an evolved node B (eNodeB or eNB), and a 5G base station (gNB). Furthermore, it may include a remote radio head (RRH), a remote radio unit (RRU), a relay, or a low-power node (such as a femto, and a pico). The term "base station" may include some or all of its functions, and each base station may provide communication coverage for a specific geographical area. And a term "cell" may refer to a base station and/or its coverage area, which is dependent on a context of the term.

In the embodiments of this disclosure, the term "user equipment (UE)" or "terminal equipment (TE)" refers to, for example, equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal.

Scenarios in the embodiments of this disclosure shall be described below by way of examples; however, this disclosure is not limited thereto.

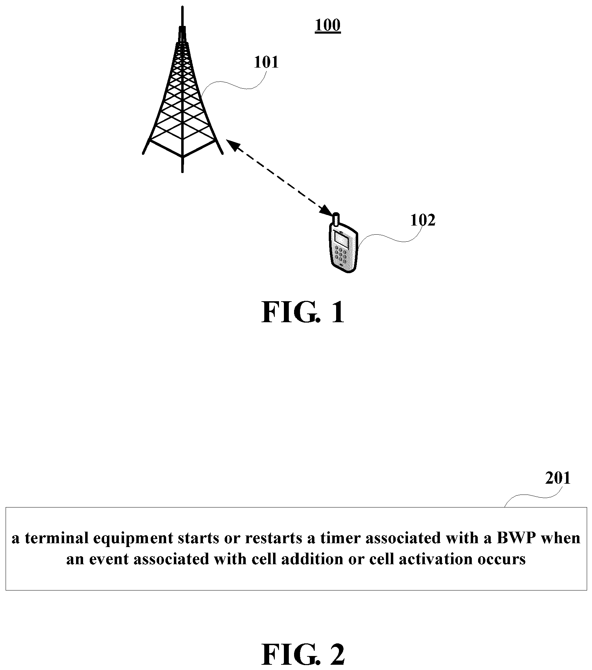

FIG. 1 is a schematic diagram of a communication system of an embodiment of this disclosure, in which a case where a user equipment and a network device are taken as examples is schematically shown. As shown in FIG. 1, a communication system 100 may include a network device 101 and a terminal equipment 102. For the sake of simplicity, FIG. 1 shall be described by taking only one terminal equipment and one network device as an example; however, the embodiment of this disclosure is not limited thereto.

In the embodiment of this disclosure, existing traffics or traffics that may be implemented in the future may be performed between the network device 101 and the terminal equipment 102. For example, such traffics may include but not limited to an enhanced mobile broadband (eMBB), massive machine type communication (MTC), and ultra-reliable and low-latency communication (URLLC).

The embodiments of this disclosure shall be described below by taking an NR system as an example. However, this disclosure is not limited thereto, and is also applicable to any systems in which similar problems exist.

The embodiments of this disclosure shall be described below with reference to the accompanying drawings.

### Embodiment 1

At present, start or restart of a timer associated with a BWP may be triggered by downlink control signaling. For example, when a PDCCH for assignment or for indicating BWP switch is received on an active BWP, the timer associated with a BWP is started or restarted. However, it was found by the inventors that cell activation or addition will cause the BWP to be activated, and at this moment, the network side is not needed to transmit additional explicit signaling (such as a PDCCH) to activate the BWP. Therefore, the timer associated with a BWP is unable to be started or restarted, which may cause the terminal device not to able to perform BWP-related operation within a reasonable period of time. Embodiment 1 of this disclosure provides a bandwidth part timing method, in which a timer associated with a BWP is started or restarted when an event associated with cell addition or cell activation occurs, which may solve a problem that a timer associated with a BWP is unable to be started or restarted in a scenario of cell addition or cell activation.

FIG. 2 is a flowchart of the bandwidth part timing method of this embodiment, applicable to a terminal equipment side. As shown FIG. 2, the method includes:
step 201: a terminal equipment starts or restarts a timer associated with a BWP when an event associated with cell addition or cell activation occurs.

In this embodiment, the network side manages states of cells according to an amount of traffics of the terminal equipment and/or channel quality of the cells; for example, when the amount of traffics of the terminal equipment is relatively large, or when channel quality of a cell is relatively good, the network side may add a cell or activate a cell for the terminal equipment; and furthermore, it may configure a BWP and a timer associated with the BWP for the terminal equipment. In this embodiment, the terminal equipment may start or restart the timer associated with the BWP when the event associated with cell addition or cell activation occurs.

In this embodiment, the BWP may include: an initial BWP, a default BWP, and an active BWP, etc., and the BWP may be a downlink BWP used by the terminal equipment in receiving data transmitted by the network side, or may be an uplink BWP used by the terminal equipment in transmitting data to the network side; wherein, frequency ranges to which the uplink BWP and the downlink BWP correspond may be identical or different, and this embodiment is not limited thereto.

In one implementation, the occurred event associated with cell addition or cell activation includes: the BWP being activated due to the cell addition or the cell activation.

In this implementation, when a cell is added or activated, the network side is not needed to transmit additional control signaling to activate the BWP configured by the network side for the terminal equipment, and the BWP configured by the network side for the terminal equipment may be activated as the cell is added or activated. The active BWP is a BWP that is activated for the first time, hence, when the currently active BWP is activated due to the cell addition or the cell activation, the timer associated with the active BWP is started or restarted, which may save signaling overhead.

In one implementation, the occurred event associated with cell addition or cell activation includes: signaling used to add a cell or activate a cell transmitted by the network side being received.

In this implementation, when the network side determines to add a cell or activate a cell for the terminal equipment, it may transmit signaling to indicate the cell addition or cell activation, and when the terminal equipment successfully receives the signaling for adding a cell or activating a cell transmitted by the network side, it starts or restarts the timer associated with the BWP, which may also save signaling overhead.

The signaling may be medium access control (MAC) layer signaling, such as an MAC control element (CE), or radio resource control signaling. However, this embodiment is not limited thereto; for example, the signaling may be a bitmap, a bit value being 1 or 0 indicating cell addition or cell activation; however, this embodiment is not limited thereto.

In this embodiment, the above cell addition includes special cell (Spcell) addition or primary cell (PCell) addition or secondary cell (SCell) addition, and the cell activation includes secondary cell (SCell) activation or serving cell activation. For example, when the terminal equipment is connected to a primary base station and the network device needs to configure and add a new primary cell at secondary base station for the terminal equipment, it is the primary cell addition; or, when the terminal equipment is connected to a base station and the network device configures and adds a new secondary cell for the terminal equipment based on a service of a primary cell, it is secondary cell activation. What described above is illustrative only, and this embodiment is not limited thereto.

In this embodiment, in step 201, before starting or restarting the timer associated with BWP, the method may further include: activating the BWP.

In this embodiment, the timer associated with BWP is configured to control the terminal equipment to perform an operation related to the BWP after the timer expires. Therefore, after the timer expires, the method may further include (not shown): the terminal equipment performing an operation related to the BWP. The related operation includes: activating the BWP or deactivating the BWP, resuming the use of the BWP or suspending the BWP, changing parameter configuration of the BWP, and switching the BWP.

For example, the timer associated with BWP is a BWP-Inactivity Timer, and after the BWP-Inactivity Timer expires, the terminal equipment switches from the current BWP to the default BWP or the initial BWP. When the network device configures the default BWP for the terminal equipment, the terminal equipment switches to the default BWP, and when the default BWP is not configured, the terminal equipment switches to the initial BWP. The current BWP is an active BWP, and the active BWP is not the initial BWP; however, this embodiment is not limited thereto. Thus, after the timer expires, the terminal equipment performs BWP switching, thereby possibly achieving an energy saving effect.

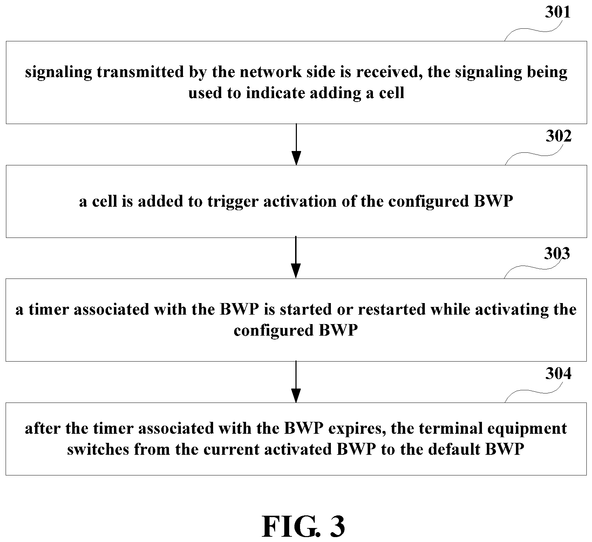

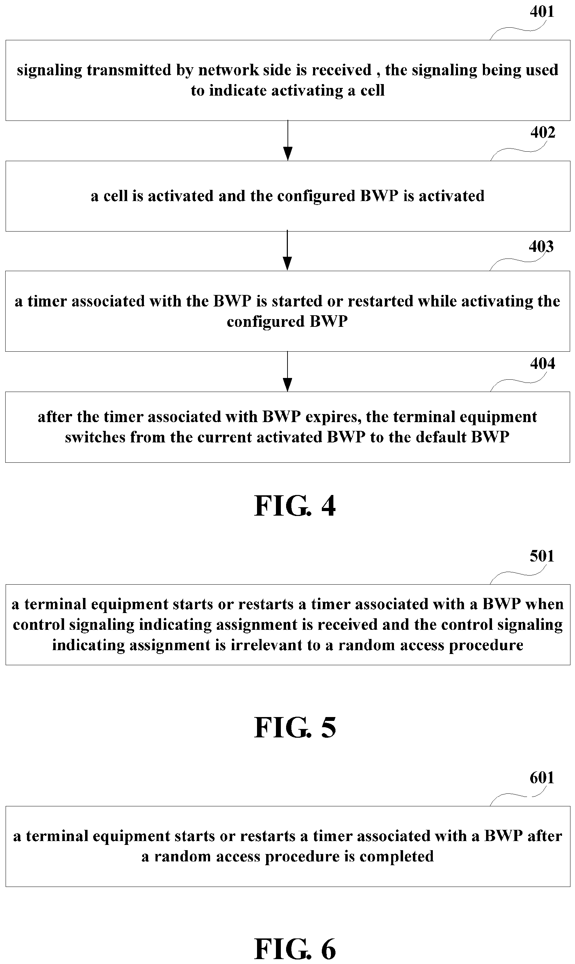

Actions and operations at the terminal equipment side when the event associated with cell addition or cell activation occurs shall be described below respectively with reference to FIGs. 3 and 4 showing the bandwidth part timing method of this embodiment.

As shown in FIG. 3, as to the cell addition, the method includes:
step 301: signaling transmitted by the network side is received, the signaling being used to indicate adding a cell;
for example, the signaling may be RRC signaling;
wherein, the signaling may include related parameters of the cell to be added or to be activated, and the related information on the BWP configured by the network side; however, this embodiment is not limited thereto, and the related parameter and the related information may be transmitted via at least one piece of other signaling separately or jointly, and reference may be made to Embodiment 4 for particular implementations of the related parameters and related information, which shall not be described herein any further;
step 302: a cell is added to trigger activation of the configured BWP;
step 303: a timer associated with the BWP is started or restarted while activating the configured BWP; and
step 304: after the timer associated with the BWP expires, the terminal equipment switches from the current active BWP to the default BWP.

As shown in FIG. 4, as to the cell activation, the method includes:
step 401: signaling transmitted by network side is received, the signaling being used to indicate activating a cell;
for example, the signaling may be an MAC CE;
wherein, the signaling may include related parameters of the cell to be added or to be activated and related information on the BWP configured by the network side; however, this embodiment is not limited thereto, and the related parameter and the related information may be transmitted via at least one piece of other signaling separately or jointly;
step 402: a cell is activated and the configured BWP is activated;
step 403: a timer associated with the BWP is started or restarted while activating the configured BWP; and
step 404: after the timer associated with BWP expires, the terminal equipment switches from the current active BWP to the default BWP.

It can be seen from the above embodiment that by starting or restarting the timer associated with a BWP when the event associated with cell addition or cell activation occurs, a problem that a timer associated with a BWP is unable to be started or restarted in a scenario of cell addition or cell activation may be solved, thereby saving signaling overhead.

### Embodiment 2

At present, start or restart of a timer associated with a BWP may be triggered via downlink control signaling. For example, when a PDCCH used for assignment or used for indicating a BWP switch is received on an active BWP, the timer associated with a BWP is started or restarted. And furthermore, it was found by the inventors that a random access response in a random access procedure is also scheduled by the PDCCH, if the received PDCCH used for assignment is only taken as a triggering condition for triggering start or restart of the timer associated with a BWP, when downlink assignment of an RAR is received, start or restart of the timer associated with a BWP will also be triggered. However, in order to prevent the terminal equipment from performing random access procedures on different BWPs, the terminal equipment is not allowed to perform such operations as running the timer associated with a BWP in the random access procedures or performing BWP switch during the random access procedures, etc., that is, when the terminal equipment initiates (initializes) random access procedures, the timer associated with a BWP needs to be stopped. Therefore, not all scenarios where the PDCCH used for assignment is received need to trigger start or restart of a timer associated with a BWP.

In order to solve the above problem, Embodiment 2 of this disclosure provides a bandwidth part timing method, in which a timer associated with a BWP is started or restarted when control signaling indicating assignment is received and the control signaling indicating assignment is irrelevant to a random access procedure. Ordinary control signaling for assignment may be differentiated from control signaling for RAR assignment, and when the ordinary control signaling for assignment (irrelevant to a random access procedure) is received, a timer associated with a BWP is started or restarted, and when the control signaling for RAR assignment or other control signaling relevant to a random access procedure is received, the timer associated with a BWP is not started or restarted, so as to ensure that terminal equipment do not perform switch of a BWP during a random access procedure.

FIG. 5 is a flowchart of the bandwidth part timing method of this embodiment, applicable to a terminal equipment side. As shown FIG. 5, the method includes:
step 501: a terminal equipment starts or restarts a timer associated with a BWP when control signaling indicating assignment is received and the control signaling indicating assignment is irrelevant to a random access procedure.

In this embodiment, when the control signaling indicating assignment is received and the control signaling indicating assignment is irrelevant to a random access procedure (i.e. when starting or restarting the timer associated with a BWP does not cause occurrence of BWP switch during the random access procedure), the timer associated with a BWP is started or restarted, that is, when the control signaling indicating assignment is received and the control signaling indicating assignment is relevant to a random access procedure, the timer associated with a BWP is not started or restarted, so as to ensure that the terminal equipment does not perform BWP switch during the random access procedure.

In this embodiment, the control signaling indicating assignment may be a downlink control channel (PDCCH); wherein, the control signaling may be received on the BWP; for example, the BWP may be an active BWP, that is, the PDCCH indicating assignment may be received on the active BWP. What described above is illustrative only, and this embodiment is not limited thereto.

In this embodiment, the control signaling indicating assignment being irrelevant to the random access procedure refers to that the control signaling is scrambled by other radio network temporary identifier (RNTI) than a random access radio network temporary identifier (RA-RNTI), or the control signaling is not used to indicate assignment of a random access response (RAR), or the control signaling is not received during the random access procedure, or there exists no currently performed random access procedure, or the terminal equipment has completed the random access procedure, or the terminal equipment has successfully received a random access response (RAR) in the random access procedure.

The random access procedure may be a contention-based random access procedure, or a non-contention-based random access procedure.

For example, in the random access procedure, by monitoring the PDCCH, the UE may receive a random access response message (Msg.2) fed back by the network side; wherein, the PDCCH is scrambled by the RA-RNTI, and the UE descrambles the PDCCH according to the RA-RNTI, and when the descrambling is successful, the Msg.2 fed back by the network side may be received, the Msg.2 including the RAR Hence, in scrambling the control signaling by using the RA-RNTI, it shows that the control signaling is used to carry the Msg.2, i.e. the control signaling is relevant to the random access procedure, that is, when the control signaling is scrambled by other RNTI than the RA-RNTI, it shows that the control signaling is irrelevant to the random access procedure, and triggering the start or restart of the timer associated with a BWP at this moment will not result in occurrence of BWP switch during the random access procedure.

For example, when the control signaling is not received in the random access procedure, or there exists no currently performed random access procedure, it may show that the control signaling is irrelevant to the random access procedure, and triggering the start or restart of the timer associated with a BWP at this moment will not result in occurrence of BWP switch during the random access procedure.

For example, when the terminal device has completed the random access procedure and the completion of the random access procedure includes success or failure of the random access procedure, it may show that the control signaling is irrelevant to the random access procedure, and triggering the start or restart of the timer associated with a BWP at this moment will not result in occurrence of BWP switch during the random access procedure. When the random access procedure is a non-contention-based random access procedure, the success of the random access procedure refers to that the Msg.2 is successfully received, and the failure of the random access procedure refers to that the number of failures of reception of the Msg.2 reaches a predetermined number of times; and when the access procedure is a contention-based random access procedure, the success of the random access procedure refers to that an Msg.4 is successfully received, and the failure of the random access procedure refers to that the number of failures of reception of the Msg.4 reaches a predetermined number of times.

For example, when the random access procedure is a non-contention-based random access procedure, if the control signaling is not used to indicate assignment of a random access response (RAR), it may show that the control signaling is not received in the random access procedure, in which case the control signaling indicating assignment received by the terminal equipment is ordinary control signaling for assignment and is irrelevant to the random access procedure, that is, triggering the start or restart of the timer associated with a BWP at this moment will not result in occurrence of BWP switch during the random access procedure.

For example, when the random access procedure is a contention-based random access procedure, if the control signaling is not used to indicate assignment of a random access response (RAR), it may show that the control signaling may be control signaling received in the Msg.4 and used for contention resolution, or may be ordinary control signaling used to indicate assignment and received out of the contention-based random access procedure, which is irrelevant to the random access procedure, that is, triggering the start or restart of the timer associated with a BWP at this moment will not result in occurrence of BWP switch during the random access procedure.

For example, when the random access procedure is a non-contention-based random access procedure, if the terminal equipment has successfully received a random access response (RAR) in the random access procedure, it may show that the terminal equipment have completed reception of the Msg.2, in which case the control signaling for assignment received by the terminal equipment is irrelevant to the random access procedure, that is, triggering the start or restart of the timer associated with a BWP at this moment will not result in occurrence of BWP switch during the random access procedure.

For example, when the random access procedure is a contention-based random access procedure, if the terminal equipment has successfully received a random access response (RAR) in the random access procedure, it may show that the terminal equipment have completed reception of the Msg.2, in which case the control signaling indicating assignment received by the terminal equipment may be control signaling used for contention resolution received in Msg.4, or may be control signaling indicating assignment received out of the contention-based random access procedure. As the RAR in the random access procedure has been successfully received, it shows that the signaling is irrelevant to the random access procedure, that is, triggering the start or restart of the timer associated with a BWP at this moment will not result in occurrence of BWP switch during the random access procedure.

In this embodiment, the BWP may be an uplink BWP or a downlink BWP, and reference may be made to Embodiment 1 for its meaning, which shall not be described herein any further. The timer associated with a BWP is used to control the terminal equipment to perform BWP-related operations after the timer expires. Therefore, after the timer expires, the method may further include (not shown): the terminal equipment performs operations related to BWP. The related operation includes: activating the BWP or deactivating the BWP, resuming using the BWP or suspending the BWP, changing parameter configuration of the BWP, and switching the BWP.

For example, the timer associated with a BWP is a BWP-InactivityTimer, and reference may be made to Embodiment 1 for a particular implementation thereof, which shall not be described herein any further.

It can be seen from the above embodiment that when ordinary control signaling used for assignment (irrelevant to the random access procedure) is received, the timer associated with a BWP is started or restarted, and when control signaling used for RAR assignment or other control signaling relevant to the random access procedure is received, the timer associated with a BWP is not started or restarted, so as to ensure that the terminal equipment do not perform BWP switch during the random access procedure.

### Embodiment 3

At present, in order to prevent terminal equipment from performing random access procedures on different BWPs, the terminal equipment is not allowed to run a timer associated with a BWP in the random access procedure, that is, when the terminal equipment initiates (initializes) the random access procedure, the timer associated with a BWP needs to be stopped. However, if the timer associated with a BWP is still not started or restarted after the random access procedure is completed, the terminal equipment is unable to perform operations of the BWP according to the timer; and if the timer associated with a BWP needs to be started or restarted, extra downlink control signaling is needed to trigger start or restart of the timer associated with a BWP.

Embodiment 3 of this disclosure provides a bandwidth part timing method, in which terminal equipment starts or restarts a timer associated with a BWP after a ransom access procedure is completed, without needing extra downlink control signaling to trigger start or restart of the timer associated with a BWP, thereby achieving an effect of saving signaling overhead.

FIG. 6 is a flowchart of the bandwidth part timing method of this embodiment, applicable to a terminal equipment side. As shown FIG. 6, the method includes:
step 601: a terminal equipment starts or restarts a timer associated with a BWP after a random access procedure is completed.

In this embodiment, the BWP may be an uplink BWP or a downlink BWP, and reference may be made to Embodiment 1 for its meaning, which shall not be described herein any further. The timer associated with a BWP is used to control the terminal equipment to perform BWP-related operations after the timer expires, thereby achieving an effect of saving energies. Therefore, after the timer expires, the method may further include (not shown): the terminal equipment performs operations related to BWP. The related operation includes: activating the BWP or deactivating the BWP, resuming using the BWP or suspending the BWP, changing parameter configuration of the BWP, and switching the BWP.

For example, the timer associated with a BWP is a BWP-InactivityTimer, and reference may be made to Embodiment 1 for a particular implementation thereof, which shall not be described herein any further.

In this embodiment, completion of the random access procedure includes failure or success of the random access procedure, and reference may be made to Embodiment 2 for meanings of the failure of the random access procedure and the success of the random access procedure, which shall not be described herein any further.

It can be seen from the above embodiment that the terminal equipment starts or restarts the timer associated with a BWP after the ransom access procedure is completed, without needing extra downlink control signaling to trigger start or restart of the timer associated with a BWP, thereby achieving an effect of saving energies.

### Embodiment 4

Embodiment 4 of this disclosure provides a bandwidth part timing method, applicable to a network device side. As principles of the method for solving problems are similar to that of Embodiment 1, reference may be made to implementation of the method of Embodiment 1 for a particular implementation of this method, with identical contents being not going to be described herein any further.

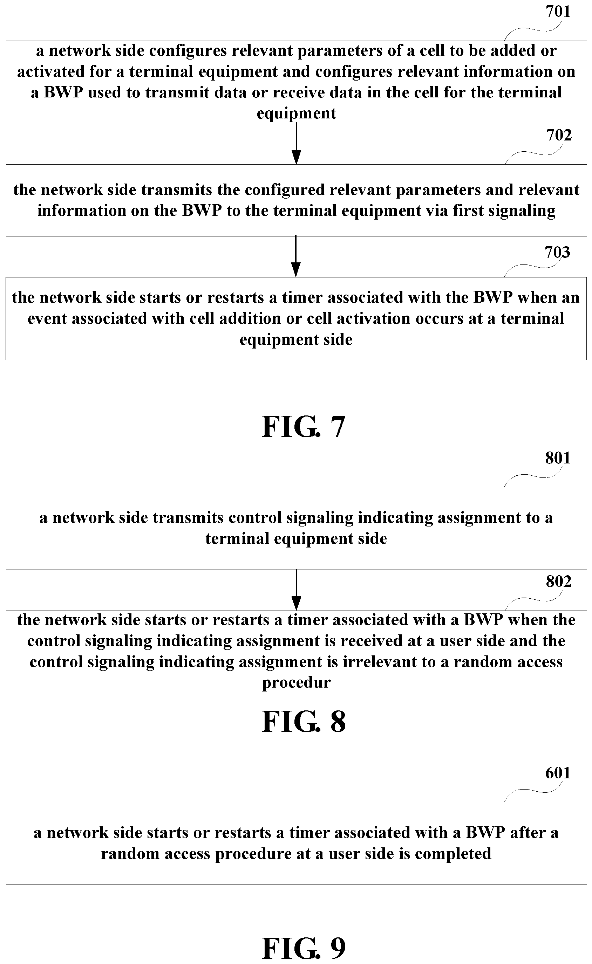

FIG. 7 is a flowchart of the bandwidth part timing method of this embodiment. As shown FIG. 7, the method includes:
step 701: a network side configures relevant parameters of a cell to be added or activated for a terminal equipment and configures relevant information on a BWP used to transmit data or receive data in the cell for the terminal equipment;
in step 701, the configured relevant parameters include such parameters as a cell ID, and carrier information of the cell, which shall not be enumerated herein any further; the configured relevant information includes, for example, an ID of a BWP activated for a first time, i.e. firstActiveDownlinkBwp-Id used when MAC of SCell is activated, or may further include an ID of a default BWP;
step 702: the network side transmits the configured relevant parameters and relevant information on the BWP to the terminal equipment via first signaling; and
step 703: the network side starts or restarts a timer associated with the BWP when an event associated with cell addition or cell activation occurs at a terminal equipment side.

In this embodiment, the network side may manage states of cells according to an amount of traffics of the terminal equipment and/or channel quality of the cells; for example, when the amount of traffics of the terminal equipment is relatively large, or when channel quality of a cell is relatively good, the network side may add a cell or activate a cell for the terminal equipment; and furthermore, it may configure a BWP and a timer associated with the BWP for the terminal equipment, and transmit it via first signaling, or via other signaling; wherein, as the signaling for adding or activating a cell is transmitted by the network device to the terminal equipment, the network device may determine that the event associated with cell addition or cell activation occurs at the terminal equipment side.

In this embodiment, the first signaling is media access control (MAC) signaling or radio resource control (RRC) signaling.

In this embodiment, reference may be made to Embodiment 1 for a particular implementation of step 703, which shall not be described herein any further.

In this embodiment, after the timer expires, the network side will perform corresponding operations according to actions of the terminal equipment. For example, after the timer expires, the terminal equipment switches to a new BWP or activate the new BWP, and the network device may perform data reception and transmission with the terminal equipment on the new BWP, which shall not be enumerated herein any further.

It can be seen from the above embodiment that by starting or restarting the timer associated with a BWP when the event associated with cell addition or cell activation occurs, a problem that a timer associated with a BWP is unable to be started or restarted in a scenario of cell addition or cell activation may be solved, thereby saving signaling overhead.

### Embodiment 5

Embodiment 5 of this disclosure provides a bandwidth part timing method, applicable to a network device side. As principles of the method for solving problems is similar to that of Embodiment 2, reference may be made to implementation of the method of Embodiment 2 for a particular implementation of this method, with identical contents being not going to be described herein any further.

FIG. 8 is a flowchart of the bandwidth part timing method of this embodiment. As shown FIG. 8, the method includes:
step 801: a network side transmits control signaling indicating assignment to a terminal equipment side; and
step 802: the network side starts or restarts a timer associated with a BWP when the control signaling indicating assignment is received at a user side and the control signaling indicating assignment is irrelevant to a random access procedure.

In this embodiment, reference may be made to Embodiment 2 for a particular implementation of step 802, which shall not be described herein any further.

In this embodiment, reference may be made to Embodiment 2 for meanings of the control signaling, the control signaling indicating assignment being irrelevant to a random access procedure, the BWP and the timer, and reference may be made to Embodiment 4 for a configuration mode of the timer, which shall not be described herein any further.

In this embodiment, after the timer expires, the network side may perform corresponding operations according to actions of the terminal equipment. For example, after the timer expires, the terminal equipment switches to a new BWP or activate the new BWP, and the network side may perform data reception and transmission with the terminal equipment on the new BWP, which shall not be enumerated herein any further.

It can be seen from the above embodiment that when ordinary control signaling used for assignment (irrelevant to the random access procedure) is received, the timer associated with a BWP is started or restarted, and when control signaling used for RAR assignment or other control signaling relevant to the random access procedure is received, the timer associated with a BWP is not started or restarted, so as to ensure that the terminal equipment do not perform BWP switch during the random access procedure.

### Embodiment 6

Embodiment 6 of this disclosure provides a bandwidth part timing method, applicable to a network device side. As principles of the method for solving problems are similar to that of Embodiment 3, reference may be made to implementation of the method of Embodiment 3 for a particular implementation of this method, with identical contents being not going to be described herein any further.

FIG. 9 is a flowchart of the bandwidth part timing method of this embodiment. As shown FIG. 9, the method includes:
step 901: a network side starts or restarts a timer associated with a BWP after a random access procedure at a user side is completed.

In this embodiment, after the user side initiates the random access procedure, the network side may receive a random access preamble (Msg.1) transmitted by the user side, and feed back a random access response (Msg.2) to the user side. Reference may be made to the related art for a particular implementation of the random access procedure, which shall not be enumerated herein any further. When it is determined that the random access procedure is completed at the user side, the network side starts or restarts the timer associated with a BWP, and reference may be made to Embodiment 3 for a particular implementation of step 903, which shall not be described herein any further.

In this embodiment, reference may be made to Embodiment 3 for meanings of the completion of the random access procedure, the BWP and the timer, and reference may be made to Embodiment 4 for a configuration mode of the timer, which shall not be described herein any further.

In this embodiment, after the timer expires, the network side may perform corresponding operations according to actions of the terminal equipment. For example, after the timer expires, the terminal equipment switches to a new BWP or activate the new BWP, and the network side may perform data reception and transmission with the terminal equipment on the new BWP, which shall not be enumerated herein any further.

It can be seen from the above embodiment that the terminal equipment starts or restarts the timer associated with a BWP after the ransom access procedure is completed, without needing extra downlink control signaling to trigger start or restart of the timer associated with a BWP, thereby achieving an effect of saving energies.

### Embodiment 7

Embodiment 7 of this disclosure provides a bandwidth part timing apparatus. As principles of the apparatus for solving problems are similar to that of the method of Embodiment 1, reference may be made to implementation of the method of Embodiment 1 for a particular implementation of the apparatus, with identical contents being not going to be described herein any further.

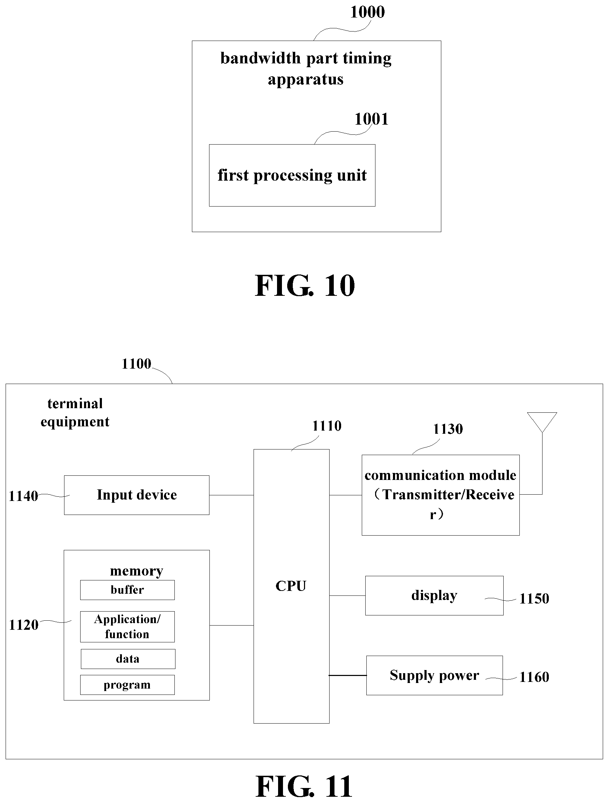

FIG. 10 is a schematic diagram of the bandwidth part timing apparatus of Embodiment 10 of this disclosure. As shown in FIG. 10, a bandwidth part timing apparatus 1000 includes:
a first processing unit 1001 configured to start or restart a timer associated with a BWP when an event associated with cell addition or cell activation occurs.

In this embodiment, reference may be made to Embodiment 1 for a particular implementation of the first processing unit 1001, which shall not be enumerated herein any further.

In this embodiment, the cell addition includes special cell addition or primary cell addition or secondary cell addition, and the cell activation includes secondary cell activation or serving cell activation, and reference may be made to Embodiment 1 for particular meanings thereof, which shall not be enumerated herein any further.

In this embodiment, the first processing unit 1001 is further configured to activate the BWP before starting or restarting the timer associated with the BWP.

In one implementation, the occurred event includes: the BWP is activated due to the cell addition or the cell activation.

In one implementation, the occurred event includes: signaling used to add a cell or activate a cell transmitted by a network side is received; wherein, the signaling is media access control layer signaling or radio resource control signaling.

In this embodiment, the BWP may be an uplink BWP or a downlink BWP, and the timer associated with the BWP is a BWP-InactivityTimer, and reference may be made to Embodiment 1 for particular meanings thereof, which shall not be enumerated herein any further.

It can be seen from the above embodiment that by starting or restarting the timer associated with a BWP when the event associated with cell addition or cell activation occurs, a problem that a timer associated with a BWP is unable to be started or restarted in a scenario of cell addition or cell activation may be solved, thereby saving signaling overhead.

### Embodiment 8

This embodiment provides a terminal equipment. As principle of the equipment for solving problems are similar to that of the method in Embodiment 1, the implementation of the method in Embodiment 1 may be referred to for implementation of the equipment, with identical contents being not going to be described herein any further.

This embodiment further provides a terminal equipment (not shown), configured with the above-described bandwidth part timing apparatus 1000.

This embodiment further provides a terminal equipment. FIG. 11 is a schematic diagram of a structure of the terminal equipment of Embodiment 11 of this disclosure. As shown in FIG. 11, a terminal equipment 1100 may include a central processing unit (CPU) 1101 and a memory 1102, the memory 1102 being coupled to the central processing unit 1101. The memory 1102 may store various data, and furthermore, it may store a program for data processing, and execute the program under control of the central processing unit 1101, so as to perform bandwidth part timing.

In one implementation, the functions of the apparatus 1000 may be integrated into the central processing unit 1101. The central processing unit 1101 may be configured to carry out the bandwidth part timing method as described in Embodiment 1.

For example, the central processing unit 1101 may be configured to: start or restart a timer associated with a BWP when an event associated with cell addition or cell activation occurs.

In this embodiment, the cell addition includes special cell addition or primary cell addition or secondary cell addition, and the cell activation includes secondary cell activation or serving cell activation, and reference may be made to Embodiment 1 for particular meanings thereof, which shall not be described herein any further.

In this embodiment, the central processing unit 1101 may be configured to: activate the BWP before starting or restarting the timer associated with the BWP.

In one implementation, the occurred event includes: the BWP is activated due to the cell addition or the cell activation.

In one implementation, the occurred event includes: signaling used to add a cell or activate a cell transmitted by a network side is received; wherein, the signaling is media access control layer signaling or radio resource control signaling.

In another implementation, the apparatus 1000 and the central processing unit 1101 may be configured separately. For example, the apparatus 1000 may be configured as a chip connected to the central processing unit 1101, such as the bandwidth part timing unit shown in FIG. 11, with its functions being realized under control of the central processing unit 1101.

Furthermore, as shown in FIG. 11, the terminal equipment 1100 may include a communication module 1103, an input unit 1104, a display 1106, an audio processor 1105, an antenna 1107, and a power supply 1108, etc. Functions of the above components are similar to those in the related art, and shall not be described herein any further. It should be noted that the terminal equipment 1100 does not necessarily include all the parts shown in FIG. 11, and the above components are not necessary; and furthermore, the terminal equipment 1100 may include parts not shown in FIG. 11, and the related art may be referred to.

It can be seen from the above embodiment that by starting or restarting the timer associated with a BWP when the event associated with cell addition or cell activation occurs, a problem that a timer associated with a BWP is unable to be started or restarted in a scenario of cell addition or cell activation may be solved, thereby saving signaling overhead.

### Embodiment 9

Embodiment 9 of this disclosure provides a bandwidth part timing apparatus. As principles of the apparatus for solving problems is similar to that of the method of Embodiment 2, reference may be made to implementation of the method of Embodiment 2 for a particular implementation of the apparatus, with identical contents being not going to be described herein any further.

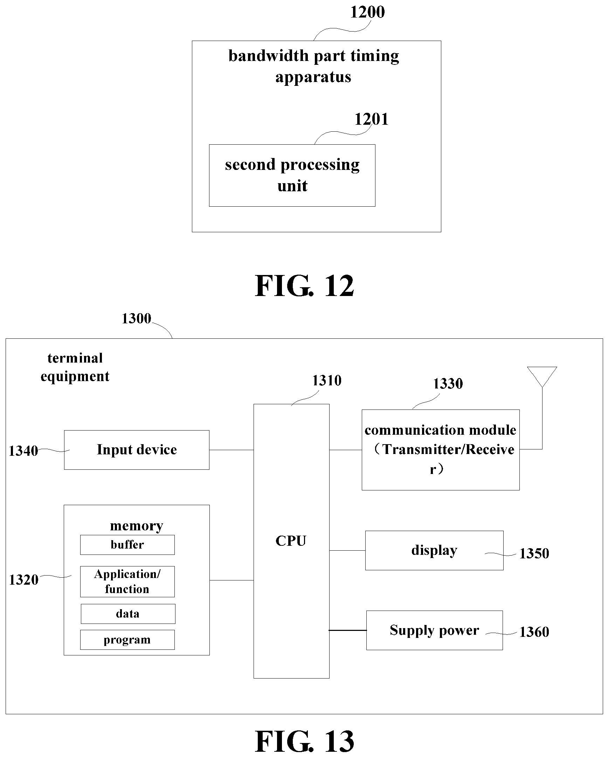

FIG. 12 is a schematic diagram of the bandwidth part timing apparatus of Embodiment 12 of this disclosure. As shown in FIG. 12, a bandwidth part timing apparatus 1200 includes:
a second processing unit 1201 configured to start or restart a timer associated with a BWP when control signaling indicating assignment is received and the control signaling indicating assignment is irrelevant to a random access procedure.

In this embodiment, reference may be made to Embodiment 2 for a particular implementation of the second processing unit 1201, which shall not be enumerated herein any further.

In this embodiment, the apparatus further includes:
a receiving unit (not shown) configured to receive the control signaling on the BWP, for example, the BWP may be an active BWP.

For example, the control signaling is a physical downlink control channel (PDCCH).

In this embodiment, the control signaling indicating assignment being irrelevant to the random access procedure refers to that the control signaling is scrambled by other radio network temporary identifiers than a random access radio network temporary identifier, or that the control signaling is not control signaling indicating assigning a random access response, or that the control signaling is not received during a random access procedure, or that there is no random access procedure that is performed currently, or that a terminal equipment has completed a random access procedure, or that a terminal equipment has successfully received a random access response in a random access procedure, and reference may be made to Embodiment 2 for a particular implementation thereof, which shall not be described herein any further.

In this embodiment, the BWP may be an uplink BWP or a downlink BWP, and the timer associated with the BWP is a BWP-InactivityTimer, and reference may be made to Embodiment 1 for particular meanings thereof, which shall not be enumerated herein any further.

It can be seen from the above embodiment that when ordinary control signaling used for assignment (irrelevant to the random access procedure) is received, the timer associated with a BWP is started or restarted, and when control signaling used for RAR assignment or other control signaling relevant to the random access procedure is received, the timer associated with a BWP is not started or restarted, so as to ensure that the terminal equipment do not perform BWP switch during the random access procedure.

### Embodiment 10

This embodiment provides a terminal equipment. As principles of the equipment for solving problems are similar to that of the method in Embodiment 2, the implementation of the method in Embodiment 2 may be referred to for implementation of the equipment, with identical contents being not going to be described herein any further.

This embodiment further provides a terminal equipment (not shown), configured with the above-described bandwidth part timing apparatus 1200.

This embodiment further provides a terminal equipment. FIG. 13 is a schematic diagram of a structure of the terminal equipment of Embodiment 13 of this disclosure. As shown in FIG. 13, a terminal equipment 1300 may include a central processing unit (CPU) 1301 and a memory 1302, the memory 1302 being coupled to the central processing unit 1301. The memory 1302 may store various data, and furthermore, it may store a program for data processing, and execute the program under control of the central processing unit 1301, so as to perform bandwidth part timing.

In one implementation, the functions of the apparatus 1200 may be integrated into the central processing unit 1301. The central processing unit 1301 may be configured to carry out the bandwidth part timing method as described in Embodiment 2.

For example, the central processing unit 1301 may be configured to: start or restart a timer associated with a BWP when control signaling indicating assignment is received and the control signaling indicating assignment is irrelevant to a random access procedure.

For example, the central processing unit 1301 may be configured to: receive the control signaling on the BWP, for example, the BWP may be an active BWP.

For example, the control signaling is a physical downlink control channel (PDCCH).

In this embodiment, the control signaling indicating assignment being irrelevant to the random access procedure refers to that the control signaling is scrambled by other radio network temporary identifiers than a random access radio network temporary identifier, or that the control signaling is not control signaling indicating assigning a random access response, or that the control signaling is not received during a random access procedure, or that there is no random access procedure that is performed currently, or that a terminal equipment has completed a random access procedure, or that a terminal equipment has successfully received a random access response in a random access procedure, and reference may be made to Embodiment 2 for a particular implementation thereof, which shall not be described herein any further.

In this embodiment, the BWP may be an uplink BWP or a downlink BWP, and the timer associated with the BWP is a BWP-InactivityTimer, and reference may be made to Embodiment 1 for particular meanings thereof, which shall not be enumerated herein any further.

In another implementation, the apparatus 1200 and the central processing unit 1301 may be configured separately. For example, the apparatus 1200 may be configured as a chip connected to the central processing unit 1301, such as the bandwidth part timing unit shown in FIG. 13, with its functions being realized under control of the central processing unit 1301.

Furthermore, as shown in FIG. 13, the terminal equipment 1300 may include a communication module 1303, an input unit 1304, a display 1306, an audio processor 1305, an antenna 1307, and a power supply 1308, etc. Functions of the above components are similar to those in the related art, and shall not be described herein any further. It should be noted that the terminal equipment 1300 does not necessarily include all the parts shown in FIG. 13, and the above components are not necessary; and furthermore, the terminal equipment 1300 may include parts not shown in FIG. 13, and the related art may be referred to.

It can be seen from the above embodiment that when ordinary control signaling used for assignment (irrelevant to the random access procedure) is received, the timer associated with a BWP is started or restarted, and when control signaling used for RAR assignment or other control signaling relevant to the random access procedure is received, the timer associated with a BWP is not started or restarted, so as to ensure that the terminal equipment do not perform BWP switch during the random access procedure.

### Embodiment 11

Embodiment 11 of this disclosure provides a bandwidth part timing apparatus. As principles of the apparatus for solving problems are similar to that of the method of Embodiment 3, reference may be made to implementation of the method of Embodiment 3 for a particular implementation of the apparatus, with identical contents being not going to be described herein any further.

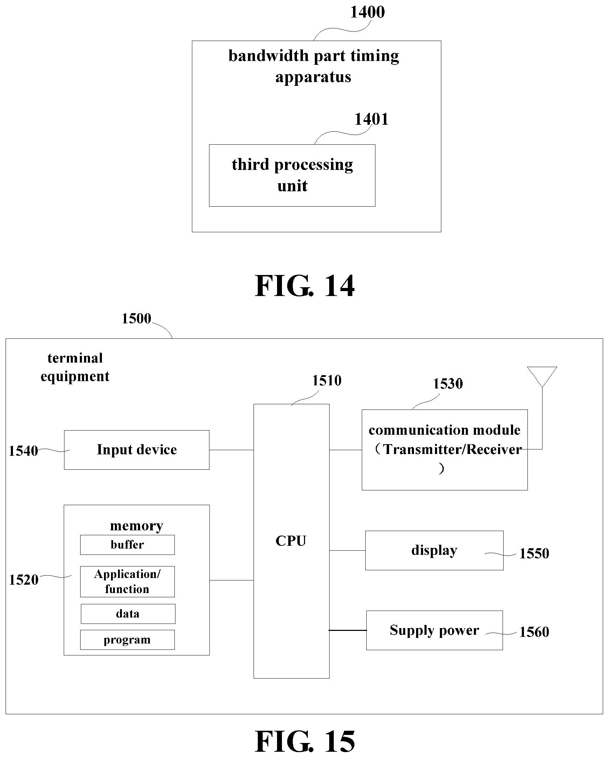

FIG. 14 is a schematic diagram of the bandwidth part timing apparatus of Embodiment 14 of this disclosure. As shown in FIG. 14, a bandwidth part timing apparatus 1400 includes:
a third processing unit 1401 configured to start or restart a timer associated with a BWP after a random access procedure is completed; in this embodiment, reference may be made to Embodiment 3 for a particular implementation of the third processing unit 1401, which shall not be enumerated herein any further.

In this embodiment, the BWP may be an uplink BWP or a downlink BWP, and the timer associated with the BWP is a BWP-InactivityTimer, and reference may be made to Embodiment 1 for a particular implementation thereof, which shall not be described herein any further.

In this embodiment, the random access procedure being completed includes that the random access procedure fails or succeeds, and reference may be made to Embodiment 2 for a particular implementation thereof, which shall not be described herein any further.

It can be seen from the above embodiment that the terminal equipment starts or restarts the timer associated with a BWP after the ransom access procedure is completed, without needing extra downlink control signaling to trigger start or restart of the timer associated with a BWP, thereby achieving an effect of saving energies.

### Embodiment 12

This embodiment provides a terminal equipment. As principles of the equipment for solving problems are similar to that of the method in Embodiment 3, the implementation of the method in Embodiment 3 may be referred to for implementation of the equipment, with identical contents being not going to be described herein any further.

This embodiment further provides a terminal equipment (not shown), configured with the above-described bandwidth part timing apparatus 1400.

This embodiment further provides a terminal equipment. FIG. 15 is a schematic diagram of a structure of the terminal equipment of Embodiment 15 of this disclosure. As shown in FIG. 15, a terminal equipment 1500 may include a central processing unit (CPU) 1501 and a memory 1502, the memory 1502 being coupled to the central processing unit 1501. The memory 1502 may store various data, and furthermore, it may store a program for data processing, and execute the program under control of the central processing unit 1501, so as to perform bandwidth part timing.

In one implementation, the functions of the apparatus 1400 may be integrated into the central processing unit 1501. The central processing unit 1501 may be configured to carry out the bandwidth part timing method as described in Embodiment 3.

For example, the central processing unit 1501 may be configured to: start or restart a timer associated with a BWP after a random access procedure is completed.

In this embodiment, the BWP may be an uplink BWP or a downlink BWP, and the timer associated with the BWP is a BWP-InactivityTimer, and reference may be made to Embodiment 1 for a particular implementation thereof, which shall not be described herein any further.

In this embodiment, the random access procedure being completed includes that the random access procedure fails or succeeds, and reference may be made to Embodiment 2 for a particular implementation thereof, which shall not be described herein any further.

In another implementation, the apparatus 1400 and the central processing unit 1501 may be configured separately. For example, the apparatus 1400 may be configured as a chip connected to the central processing unit 1501, such as the bandwidth part timing unit shown in FIG. 15, with its functions being realized under control of the central processing unit 1501.

Furthermore, as shown in FIG. 15, the terminal equipment 1500 may include a communication module 1503, an input unit 1504, a display 1506, an audio processor 1505, an antenna 1507, and a power supply 1508, etc. Functions of the above components are similar to those in the related art, and shall not be described herein any further. It should be noted that the terminal equipment 1500 does not necessarily include all the parts shown in FIG. 15, and the above components are not necessary; and furthermore, the terminal equipment 1500 may include parts not shown in FIG. 15, and the related art may be referred to.

It can be seen from the above embodiment that the terminal equipment starts or restarts the timer associated with a BWP after the ransom access procedure is completed, without needing extra downlink control signaling to trigger start or restart of the timer associated with a BWP, thereby achieving an effect of saving energies.

### Embodiment 13

Embodiment 13 of this disclosure provides a bandwidth part timing apparatus. As principles of the apparatus for solving problems are similar to that of the method of Embodiment 4, reference may be made to implementation of the method of Embodiment 4 for a particular implementation of the apparatus, with identical contents being not going to be described herein any further.

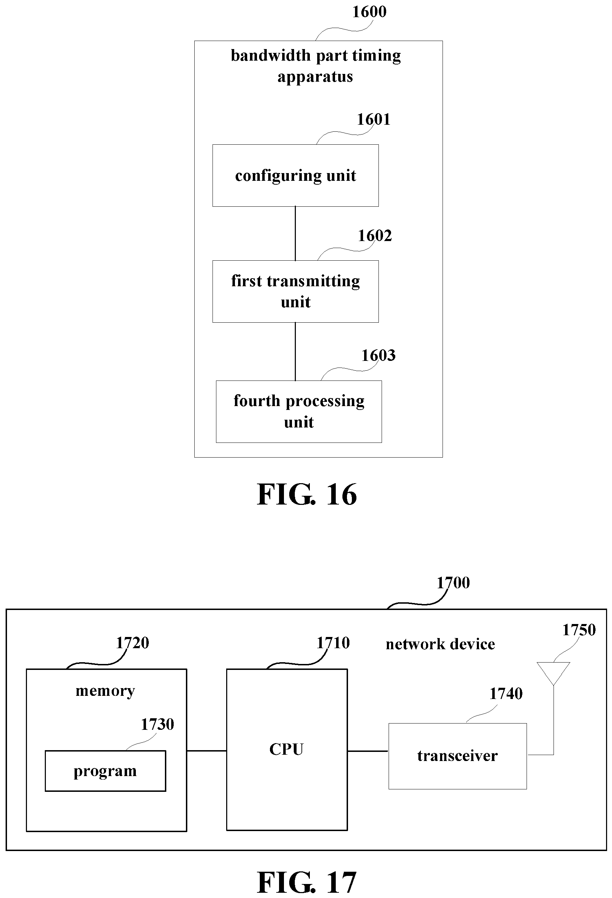

FIG. 16 is a schematic diagram of the bandwidth part timing apparatus of Embodiment 13 of this disclosure. As shown in FIG. 16, a bandwidth part timing apparatus 1600 includes:
a configuring unit 1601 configured to configure relevant parameters of a cell to be added or activated for a terminal equipment and configure relevant information on a BWP used to transmit data or receive data in the cell for the terminal equipment;
a first transmitting unit 1602 configured to transmit the configured relevant parameters and relevant information on the BWP to the terminal equipment via first signaling; and
a fourth processing unit 1603 configured to start or restart a timer associated with the BWP when an event associated with cell addition or cell activation occurs at a terminal equipment side.

In this embodiment, reference may be made to embodiments 1 and 4 for particular implementations of the configuring unit 1601, the first transmitting unit 1602 and the fourth processing unit 1603, with repeated parts being not going to be described herein any further.

In this embodiment, the first signaling is media access control signaling or radio resource control signaling.

It can be seen from the above embodiment that by starting or restarting the timer associated with a BWP when the event associated with cell addition or cell activation occurs, a problem that a timer associated with a BWP is unable to be started or restarted in a scenario of cell addition or cell activation may be solved, thereby saving signaling overhead.

### Embodiment 14

Embodiment 14 provides a network device. As principles of the device for solving problems are similar to that of the method in Embodiment 4, the implementation of the method in Embodiment 4 may be referred to for implementation of the device, with identical contents being not going to be described herein any further.

This embodiment further provides a network device (not shown), configured with the above-described bandwidth part timing apparatus 1600.

Embodiment 14 further provides a network device. As principles of the device for solving problems are similar to that of the method in Embodiment 4, the implementation of the method in Embodiment 4 may be referred to for implementation of the device, with identical contents being not going to be described herein any further. FIG. 17 is a schematic diagram of a structure of the network device. As shown in FIG. 17, a network device 1700 may include a central processing unit (CPU) 1701 and a memory 1702, the memory 1702 being coupled to the central processing unit 1701. The memory 1702 may store various data, and furthermore, it may store a program for data processing, and execute the program under control of the central processing unit 1701, so as to transmit related information.

In one implementation, the functions of the apparatus 1600 may be integrated into the central processing unit 1701. The central processing unit 1701 may be configured to carry out the bandwidth part timing method as described in Embodiment 4.

For example, the central processing unit 1701 may be configured to: configure relevant parameters of a cell to be added or activated for a terminal equipment and configure relevant information on a BWP used to transmit data or receive data in the cell for the terminal equipment; transmit the configured relevant parameters and relevant information on the BWP to the terminal equipment via first signaling; and start or restart a timer associated with the BWP when an event associated with cell addition or cell activation occurs at a terminal equipment side.

Furthermore, reference may be made to Embodiment 4 for a particular configuration mode of the central processing unit 1701, which shall not be described herein any further.

In another implementation, the apparatus 1600 and the central processing unit 1701 may be configured separately. For example, the apparatus 1600 may be configured as a chip connected to the central processing unit 1701, such as the unit shown in FIG. 17, with its functions being realized under control of the central processing unit 1701.

Furthermore, as shown in FIG. 17, the network device 1700 may include a transceiver 1703, and an antenna 1704, etc. Functions of the above components are similar to those in the related art, and shall not be described herein any further. It should be noted that the network device 1700 does not necessarily include all the parts shown in FIG. 17, and the above components are not necessary; and furthermore, the network device 1700 may include parts not shown in FIG. 17, and the related art may be referred to.

It can be seen from the above embodiment that by starting or restarting the timer associated with a BWP when the event associated with cell addition or cell activation occurs, a problem that a timer associated with a BWP is unable to be started or restarted in a scenario of cell addition or cell activation may be solved, thereby saving signaling overhead.

### Embodiment 15

Embodiment 15 of this disclosure provides a bandwidth part timing apparatus. As principles of the apparatus for solving problems are similar to that of the method of Embodiment 5, reference may be made to implementation of the method of Embodiment 5 for a particular implementation of the apparatus, with identical contents being not going to be described herein any further.

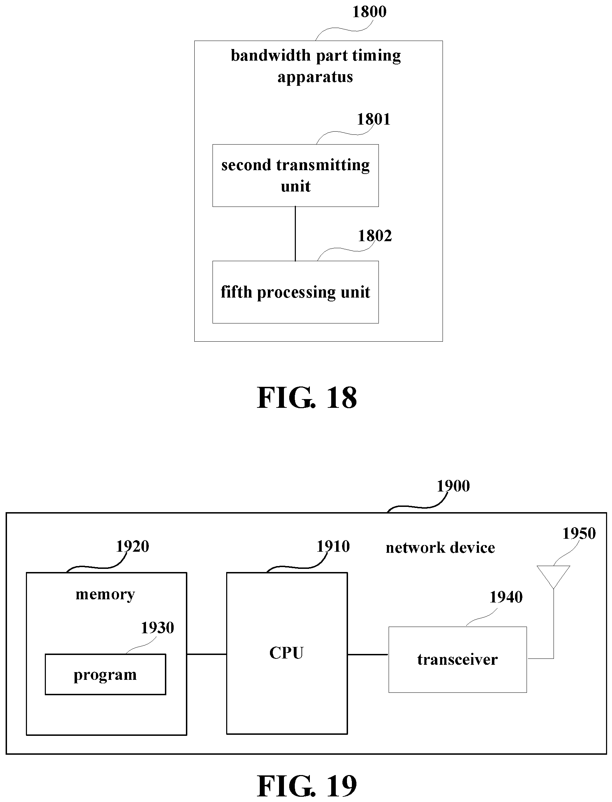

FIG. 18 is a schematic diagram of the bandwidth part timing apparatus of Embodiment 15 of this disclosure. As shown in FIG. 18, a bandwidth part timing apparatus 1800 includes:
a second transmitting unit 1801 configured to transmit control signaling indicating assignment to a terminal equipment side; and
a fifth processing unit 1802 configured to start or restart a timer associated with a BWP when the control signaling indicating assignment is received at a user side and the control signaling indicating assignment is irrelevant to a random access procedure.

In this embodiment, reference may be made to embodiments 2 and 5 for particular implementations of the second transmitting unit 1801 and the fifth processing unit 1802, with repeated parts being not going to be described herein any further.

In this embodiment, the control signaling is a physical downlink control channel (PDCCH), and the second transmitting unit 1801 may transmit the control signaling on the BWP; for example, the BWP may be an active BWP.

It can be seen from the above embodiment that when ordinary control signaling used for assignment (irrelevant to the random access procedure) is received, the timer associated with a BWP is started or restarted, and when control signaling used for RAR assignment or other control signaling relevant to the random access procedure is received, the timer associated with a BWP is not started or restarted, so as to ensure that the terminal equipment do not perform BWP switch during the random access procedure.

### Embodiment 16

Embodiment 16 provides a network device. As principles of the device for solving problems are similar to that of the method in Embodiment 5, the implementation of the method in Embodiment 5 may be referred to for implementation of the device, with identical contents being not going to be described herein any further.

This embodiment further provides a network device (not shown), configured with the above-described bandwidth part timing apparatus 1800.

Embodiment 16 further provides a network device. As principles of the device for solving problems is similar to that of the method in Embodiment 4, the implementation of the method in Embodiment 5 may be referred to for implementation of the device, with identical contents being not going to be described herein any further. FIG. 19 is a schematic diagram of a structure of the network device. As shown in FIG. 19, a network device 1900 may include a central processing unit (CPU) 1901 and a memory 1902, the memory 1902 being coupled to the central processing unit 1901. The memory 1902 may store various data, and furthermore, it may store a program for data processing, and execute the program under control of the central processing unit 1901, so as to transmit related information.

In one implementation, the functions of the apparatus 1800 may be integrated into the central processing unit 1901. The central processing unit 1901 may be configured to carry out the bandwidth part timing method as described in Embodiment 5.

For example, the central processing unit 1901 may be configured to: transmit control signaling indicating assignment to a terminal equipment side; and start or restart a timer associated with a BWP when the control signaling indicating assignment is received at a user side and the control signaling indicating assignment is irrelevant to a random access procedure.

Furthermore, reference may be made to Embodiment 5 for a particular configuration mode of the central processing unit 1901, which shall not be described herein any further.

In another implementation, the apparatus 1800 and the central processing unit 1901 may be configured separately. For example, the apparatus 1800 may be configured as a chip connected to the central processing unit 1901, such as the unit shown in FIG. 19, with its functions being realized under control of the central processing unit 1901.

Furthermore, as shown in FIG. 19, the network device 1900 may include a transceiver 1903, and an antenna 1904, etc. Functions of the above components are similar to those in the related art, and shall not be described herein any further. It should be noted that the network device 1900 does not necessarily include all the parts shown in FIG. 19, and the above components are not necessary; and furthermore, the network device 1900 may include parts not shown in FIG. 19, and the related art may be referred to.

It can be seen from the above embodiment that when ordinary control signaling used for assignment (irrelevant to the random access procedure) is received, the timer associated with a BWP is started or restarted, and when control signaling used for RAR assignment or other control signaling relevant to the random access procedure is received, the timer associated with a BWP is not started or restarted, so as to ensure that the terminal equipment do not perform BWP switch during the random access procedure.

### Embodiment 17

Embodiment 17 of this disclosure provides a bandwidth part timing apparatus. As principles of the apparatus for solving problems are similar to that of the method of Embodiment 6, reference may be made to implementation of the method of Embodiment 6 for a particular implementation of the apparatus, with identical contents being not going to be described herein any further.

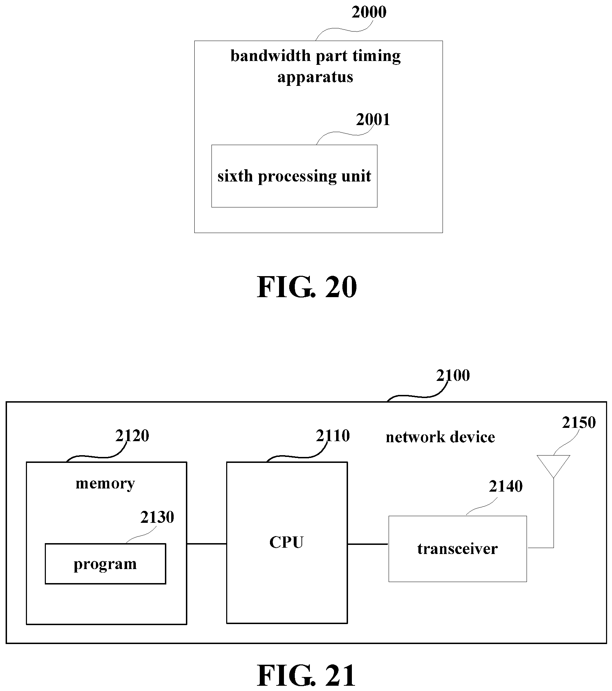

FIG. 20 is a schematic diagram of the bandwidth part timing apparatus of Embodiment 17 of this disclosure. As shown in FIG. 20, a bandwidth part timing apparatus 2000 includes:
a sixth processing unit 2001 configured to start or restart a timer associated with a BWP after a random access procedure at a user side is completed.

In this embodiment, reference may be made to embodiments 3 and 6 for particular implementations of the sixth processing unit 2001, with repeated parts being not going to be described herein any further.

It can be seen from the above embodiment that the terminal equipment starts or restarts the timer associated with a BWP after the ransom access procedure is completed, without needing extra downlink control signaling to trigger start or restart of the timer associated with a BWP, thereby achieving an effect of saving energies.

### Embodiment 18

Embodiment 16 provides a network device. As principles of the device for solving problems are similar to that of the method in Embodiment 6, the implementation of the method in Embodiment 6 may be referred to for implementation of the device, with identical contents being not going to be described herein any further.

This embodiment further provides a network device (not shown), configured with the above-described bandwidth part timing apparatus 2000.

Embodiment 18 further provides a network device. As principles of the device for solving problems are similar to that of the method in Embodiment 6, the implementation of the method in Embodiment 6 may be referred to for implementation of the device, with identical contents being not going to be described herein any further. FIG. 21 is a schematic diagram of a structure of the network device. As shown in FIG. 21, a network device 2100 may include a central processing unit (CPU) 2101 and a memory 2102, the memory 2102 being coupled to the central processing unit 2101. The memory 2102 may store various data, and furthermore, it may store a program for data processing, and execute the program under control of the central processing unit 2101, so as to transmit related information.

In one implementation, the functions of the apparatus 2000 may be integrated into the central processing unit 2101. The central processing unit 2101 may be configured to carry out the bandwidth part timing method as described in Embodiment 6.

For example, the central processing unit 2101 may be configured to: start or restart a timer associated with a BWP after a random access procedure at a user side is completed.

Furthermore, reference may be made to Embodiment 6 for a particular configuration mode of the central processing unit 2101, which shall not be described herein any further.

In another implementation, the apparatus 2000 and the central processing unit 2101 may be configured separately. For example, the apparatus 2000 may be configured as a chip connected to the central processing unit 2101, such as the unit shown in FIG. 21, with its functions being realized under control of the central processing unit 2101.

Furthermore, as shown in FIG. 21, the network device 2100 may include a transceiver 2103, and an antenna 2104, etc. Functions of the above components are similar to those in the related art, and shall not be described herein any further. It should be noted that the network device 2100 does not necessarily include all the parts shown in FIG. 21, and the above components are not necessary; and furthermore, the network device 2100 may include parts not shown in FIG. 21, and the related art may be referred to.

It can be seen from the above embodiment that the terminal equipment starts or restarts the timer associated with a BWP after the ransom access procedure is completed, without needing extra downlink control signaling to trigger start or restart of the timer associated with a BWP, thereby achieving an effect of saving energies.

### Embodiment 19

Embodiment 19 provides a communication system, including the network device in Embodiment 18 and the terminal equipment in Embodiment 12, or including the network device in Embodiment 16 and the terminal equipment in Embodiment 10, or including the network device in Embodiment 14 and the terminal equipment in Embodiment 8, the contents of which being incorporated herein, and being not going to be described herein any further.

An embodiment of the present disclosure provides a computer readable program, which, when executed in a bandwidth part timing apparatus or a terminal equipment, may cause the bandwidth part timing apparatus or the terminal equipment to carry out the bandwidth part timing methods as described in embodiments 1-3.

An embodiment of the present disclosure provides a computer storage medium, including a computer readable program which may cause a bandwidth part timing apparatus or a terminal equipment to carry out the bandwidth part timing methods as described in embodiments 1-3.

An embodiment of the present disclosure provides a computer readable program, which, when executed in a bandwidth part timing apparatus or a network device, may cause the bandwidth part timing apparatus or the network device to carry out the bandwidth part timing methods as described in embodiments 4-6.

An embodiment of the present disclosure provides a computer storage medium, including a computer readable program, which may cause a bandwidth part timing apparatus or a network device to carry out the bandwidth part timing methods as described in embodiments 4-6.

The above apparatuses and methods of this disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory.

The bandwidth part timing methods carried out in the bandwidth part timing apparatuses described with reference to the embodiments of this disclosure may be directly embodied as hardware, software modules executed by a processor, or a combination thereof. For example, one or more functional block diagrams and/or one or more combinations of the functional block diagrams shown in FIGs. 10-21 may either correspond to software modules of procedures of a computer program, or correspond to hardware modules. Such software modules may respectively correspond to the steps shown in FIGs. 2-9. And the hardware module, for example, may be carried out by firming the soft modules by using a field programmable gate array (FPGA).

The soft modules may be located in an RAM, a flash memory, an ROM, an EPROM, and an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIGs. 10-21 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIGs. 10-21 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

For implementations of this disclosure containing the above embodiments, following supplements are further disclosed.
Supplement 1. A bandwidth part timing method, including:
   configuring relevant parameters of a cell to be added or activated by a network device for a terminal equipment and configuring relevant information on a BWP used to transmit data or receive data in the cell for the terminal equipment;
   transmitting the configured relevant parameters and relevant information on the BWP to the terminal equipment via first signaling; and
   starting or restarting a timer associated with the BWP by the network device when an event associated with cell addition or cell activation occurs at a terminal equipment side.
Supplement 2. The method according to supplement 1, wherein the first signaling is media access control layer signaling or radio resource control signaling.
Supplement 3. A bandwidth part timing method, including:
   transmitting control signaling indicating assignment by a network device to a terminal equipment side; and
   starting or restarting a timer associated with a BWP by the network device side when the control signaling indicating assignment is received at a user equipment side and the control signaling indicating assignment is irrelevant to a random access procedure.
Supplement 4. The method according to supplement 3, wherein the control signaling is a physical downlink control channel PDCCH.
Supplement 5. The method according to supplement 3, wherein the network device side transmits the control signaling on the BWP.
Supplement 6. A bandwidth part timing method, including:
   starting or restarting a timer associated with a BWP by a network device side after a random access procedure at a user equipment side is completed.
Supplement 7. A bandwidth part timing method, including:
   starting or restarting a timer associated with a BWP by a terminal equipment when an event associated with cell addition or cell activation occurs.
Supplement 8. The method according to supplement 7, wherein the cell addition includes special cell addition or primary cell addition or secondary cell addition.
Supplement 9. The method according to supplement 7, wherein the cell activation includes secondary cell activation or serving cell activation.
Supplement 10. The method according to supplement 7, wherein the BWP is activated before starting or restarting the timer associated with the BWP.
Supplement 11. The method according to supplement 7, wherein the occurred event includes:
   the BWP being activated due to the cell addition or the cell activation.
Supplement 12. The method according to supplement 7, wherein the occurred event includes:
   receiving signaling used to add a cell or activate a cell transmitted by a network side.
Supplement 13. The method according to supplement 12, wherein the signaling is media access control layer signaling or radio resource control signaling.
Supplement 14. A bandwidth part timing method, including:
   starting or restarting a timer associated with a BWP by a terminal equipment when control signaling indicating assignment is received and the control signaling indicating assignment is irrelevant to a random access procedure.
Supplement 15. The method according to supplement 14, wherein the control signaling is received on the BWP.
Supplement 16. The method according to supplement 14, wherein the control signaling is a physical downlink control channel (PDCCH).
Supplement 17. The method according to supplement 14, wherein the control signaling indicating assignment being irrelevant to the random access procedure refers to that the control signaling is scrambled by other radio network temporary identifiers than a random access radio network temporary identifier, or that the control signaling is not control signaling indicating assigning a random access response, or that the control signaling is not received during a random access procedure, or that there is no random access procedure that is performed currently, or that a terminal equipment has completed a random access procedure, or that a terminal equipment has successfully received a random access response in a random access procedure.
Supplement 18. The method according to supplement 14, wherein the BWP is an active BWP.
Supplement 19. A bandwidth part timing method, including:
   starting or restarting a timer associated with a BWP by a terminal equipment after a random access procedure is completed.
Supplement 20. The method according to supplement 7, or 14 or 19, wherein the BWP is an uplink BWP or a downlink BWP.
Supplement 21. The method according to supplement 7, or 14 or 19, wherein the timer associated with the BWP is a BWP-InactivityTimer.
Supplement 22. The method according to supplement 17 or 19, wherein the random access procedure being completed includes that the random access procedure fails or succeeds.
Supplement 23. A bandwidth part timing apparatus, including:
   a configuring unit configured to configure relevant parameters of a cell to be added or activated for a terminal device and configure relevant information on a BWP used to transmit data or receive data in the cell for the terminal device;
   a transmitting unit configured to transmit the configured relevant parameters and relevant information on the BWP to the terminal device via first signaling; and
   a fourth processing unit configured to start or restart a timer associated with the BWP when an event associated with cell addition or cell activation occurs at a terminal device side.
Supplement 24. The apparatus according to supplement 23, wherein the first signaling is media access control layer signaling or radio resource control signaling.
Supplement 25. A bandwidth part timing apparatus, including:
   a second transmitting unit configured to transmit control signaling indicating assignment to a terminal device side; and
   a fifth processing unit configured to start or restart a timer associated with a BWP when the control signaling indicating assignment is received at a UE side and the control signaling indicating assignment is irrelevant to a random access procedure.
Supplement 26. The apparatus according to supplement 25, wherein the control signaling is a physical downlink control channel (PDCCH).
Supplement 27. The apparatus according to supplement 25, wherein the second transmitting unit transmits the control signaling on the BWP.
Supplement 28. A bandwidth part timing apparatus, including:
   a sixth processing unit configured to start or restart a timer associated with a BWP after a random access procedure at a user side is finished.

## Claims

1. A bandwidth part timing apparatus, comprising:
a first processing unit configured to start or restart a timer associated with a bandwidth part (BWP) when an event associated with cell addition or cell activation occurs.

2. The apparatus according to claim 1, wherein the cell addition comprises special cell addition or primary cell addition or secondary cell addition.

3. The apparatus according to claim 1, wherein the cell activation comprises secondary cell activation or serving cell activation.

4. The apparatus according to claim 1, wherein the first processing unit is further configured to activate the BWP before starting or restarting the timer associated with the BWP.

5. The apparatus according to claim 1, wherein the occurred event comprises:
the BWP being activated due to the cell addition or the cell activation.

6. The apparatus according to claim 1, wherein the occurred event comprises:
signaling used to add a cell or activate a cell transmitted by a network side is received.

7. The apparatus according to claim 6, wherein the signaling is media access control layer signaling or radio resource control signaling.

8. A bandwidth part timing apparatus, comprising:
a second processing unit configured to start or restart a timer associated with a BWP when control signaling indicating assignment is received and the control signaling indicating assignment is irrelevant to a random access procedure.

9. The apparatus according to claim 8, wherein the apparatus further comprises:
a receiving unit configured to receive the control signaling on the BWP.

10. The apparatus according to claim 8, wherein the control signaling is a physical downlink control channel (PDCCH).

11. The apparatus according to claim 8, wherein the control signaling indicating assignment being irrelevant to the random access procedure refers to that the control signaling is scrambled by other radio network temporary identifiers than a random access radio network temporary identifier, or that the control signaling is not control signaling indicating assigning a random access response, or that the control signaling is not received during a random access procedure, or that there is no random access procedure that is performed currently, or that a terminal equipment has completed a random access procedure, or that a terminal equipment has successfully received a random access response in a random access procedure.

12. The apparatus according to claim 8, wherein the BWP is an active BWP.

13. A bandwidth part timing apparatus, comprising:
a third processing unit configured to start or restart a timer associated with a BWP after a random access procedure is completed.

14. The apparatus according to claim 1 or 8 or 13, wherein the BWP is an uplink BWP or a downlink BWP.

15. The apparatus according to claim 1 or 8 or 13, wherein the timer associated with the BWP is a BWP-InactivityTimer.

16. The apparatus according to claim 11 or 13, wherein the random access procedure being completed comprises that the random access procedure fails or succeeds.
